# EUROPÄISCHE PATENTANMELDUNG

(11) **EP 1 336 359 A1**
(43) Veröffentlichungstag der Anmeldung: **20.08.2003**
(21) Anmeldenummer: 03000479.0
(22) Anmeldetag: 11.01.2003
(51) Int. Cl.: A47B 96/14

(54) **Funktionssäule**

(30) Priorität: 14.02.2002 DE 20202449 U
(71) Anmelder: Westermann KG, 59759 Arnsberg (DE)
(72) Erfinder: Neuhaus, Egbert, 59759 Arnsberg (DE)
(74) Vertreter: Müller, Enno, Dipl.-Ing.

(57) **Zusammenfassung**

Die Erfindung bezieht sich auf eine Funktionssäule zur Aufstellung in beispielsweise einer Küche, mit einer vom Boden zur Decke reichenden Tragsäule (1), welche durch Verspannung gehalten ist, und an der Tragsäule (1) befestigten Elementen (3), wie Aufnahmen (4), Halterungen (5) oder Ablagen (6), wobei die Elemente (3) an einem die Tragsäule (1) bildenden Rohr (2) mittels Halterungsmuffen (7) einstellbar befestigt sind, wobei weiter eine Aufnahme (4) korbartig ausgebildet ist, mit einem aus durchscheinendem Material bestehenden Korbboden (28) und schlägt zur attraktiven Ergänzung ihrer Einsatzpalette vor, dass der aus einem Kunststoffmaterial bestehende Korbboden (28) farbig ist.

## Beschreibung

Die Erfindung bezieht sich auf eine Funktionssäule zur Aufstellung in einer Küche, mit einer vom Boden zur Decke reichenden Tragsäule, welche durch Verspannung gehaltert ist, und an der Tragsäule befestigten Elementen wie Aufnahmen, Halterungen oder Ablagen, wobei die Elemente an einem die Tragsäule bildenden Rohr mittels Halterungsmuffen einstellbar befestigt sind, wobei weiter eine Aufnahme korbartig ausgebildet ist, mit einem aus durchscheinendem Material bestehenden Korbboden.

Entsprechende Funktionssäulen sind in Gebrauch und so markterhältlich. Die korbartige Ausbildung einer Aufnahme im Verein mit einem durchscheinenden Korbboden erlaubt, sogar aus vom Boden her gehender Sicht z.B. den Füllgrad der entsprechenden korbartigen Aufnahme festzustellen.

In Kenntnis dieser Vorgabe hat sich die Erfindung die Aufgabe gestellt, eine gattungsgemäße Funktionssäule bezüglich ihrer Einsatzpalette weiterzubilden.

Diese Aufgabe ist zunächst und im Wesentlichen bei einer Funktionssäule mit den Merkmalen des Anspruchs 1 gelöst, wobei darauf abgestellt ist, dass der aus einem Kunststoffmaterial bestehende Korbboden farbig ist.

Zufolge solcher Ausgestaltung ist eine der Funktionssäule zuordbare korbartige Aufnahme erzielt, an der die dekorative Wirkung erhöht ist. Dabei ist die geschilderte Inspizierbarkeit zufolge der durchscheinenden Eigenschaft nicht beeinträchtigt. Den Korbboden aus entsprechend eingefärbtem oder farbbeschichteten Kunststoffmaterial herzustellen, erbringt eine durchaus wirtschaftliche Fertigung. Außerdem kann durch bestimmte Auswahl des Kunststoffes, z.B. Acryl, auch das Eigengewicht der geschaffenen Aufnahme recht gering gehalten werden. Dementsprechend sind auch die Halterungen praktisch nur moderat belastet. Insgesamt stellt ein solcher Aufbau schon aus sich einen optischvisuellen Blickfang dar. Die Funktionssäule fällt in ihrer Bestückungsart entsprechend attraktiv aus, dies sogar schon bei Tageslicht.

Die Gegenstände der weiteren Ansprüche sind nachstehend in Bezug zu dem Gegenstand des Anspruches 1 erläutert, können aber auch in ihrer unabhängigen Formulierung von Bedeutung sein. So ist weiterbildend vorgesehen, dass der zentral gehalterte Korbboden fingerdick ausgebildet ist. Die zentrale Halterung erbringt ausgewogene Belastung. Die fingerdicke Ausbildung des Korbbodens dient der Stabilität, lässt andererseits aber auch die Variation farblicher Effekte zu, einfach durch mehr oder weniger große Anreicherung an Farbe; bedeutend ist bei einer entsprechenden Dicke aber auch der technische Vorteil, der sich im Zusammenhang mit dem Anbringen von Befestigungsmitteln einstellt. So kann beispielsweise von erheblich in die Tiefe gehenden Befestigungsmitteln ausgegangen werden. Bezüglich der Fingerdicke liegt die einer Hand eines Erwachsenen zugrunde. Sodann besteht ein vorteilhaftes Merkmal der Erfindung darin, dass der Korbboden plattenartig ausgebildet ist. Andererseits sind aber auch Strukturen denkbar, die in eine tellerrandartige Lösung übergehen. Selbst vergrößernd wirkende Strukturen wie beispielsweise die Fresnellinse sind hier anwendbar. Im Hinblick auf einen günstigen peripheren Lichtbrecheffekt kann es von Vorteil sein, dass die umlaufende Stirnrandfläche des Korbbodens unverkleidet ist. Hierdurch können intensivere Lichteffekte erreicht werden. Sodann ist es von Vorteil, dass ein Korbaufbau ein Band aufweist, dass, jedenfalls innenseitig, als Spiegelfläche wirkt. Das Streulicht des farbigen Korbbodens taucht somit auch die Funktionsteile des Korbes in der Farbe des Korbbodens entsprechendes Licht. Eine Ausgestaltung von sogar eigenständiger Bedeutung ergibt sich des Weiteren dadurch, dass die Tragsäule eine daran gehalterte elektrische Lichtquelle aufweist. Ist schon unter der Einwirkung von Tageslicht eine auffällige Gestaltung vorhanden, so vergrößert sich diese Wirkung durch die besagte Lichtquelle noch, so dass sogar ein optisch-visuell überragender Blickfang vorliegt. Der geworfene Lichtstrahl wird intensiver, so dass am Boden praktisch ein teppichartiger, veränderbarer Lichtfleck entsteht. Vor allem bei hell uni ausgestatteten Wohnräumen hebt sich dieser Lichtfleck besonders auffallend ab. Die Lichtquelle an einem Ausleger anzubringen, erbringt die genügend weite Abstandsstellung zur Tragsäule hin. Ein solcher auslegerartige Arm kann, wie die übrigen Elemente der Tragsäule, ortsveränderlich sein, also beispielsweise drehbar und sogar höhenverstellbar, und dies stufenlos. Durch die Verstellfähigkeit des Korbbodens lässt sich hierüber ein diffuser oder auch scharf gezeichneter Farbfleck projizieren. Schließlich ist es von Vorteil, dass der Abstand der Lichtquelle zur Achse der Tragsäule im Bereich des Durchmessers des Korbbodens liegt. Über die Abstandsvariation lässt überdies sich die Größe des Lichtflecks einstellen. Selbstredend kann die Lichtquelle auch stationär, also in der Decke der Baulichkeit installiert sein. Andererseits lässt sich aber auch das Ganze als Bodenstrahler realisieren, wobei demgemäß der Lichtfleck gegen die Wand bzw. gegen die Decke gerichtet einstellbar ist. Die geschilderte Version, gemäß welcher die Lichtquelle an der Tragsäule ist, beinhaltet zugleich den Vorteil, die in aller Regel als Rohr ausgebildete Tragsäule zur Führung der Versorungsleitungen zu nutzen. Die Tragsäule wird so gleichsam zu einer kombinierten Stehlampe.

Der Gegenstand der Erfindung ist nachstehend anhand eines zeichnerisch veranschaulichten Ausführungsbeispieles näher erläutert. Es zeigt:
- Fig. 1: eine Totalansicht einer Funktionssäule mit Elementen bestückt, beispielsweise zwischen Boden und Decke eines Raumes senkrecht fixiert gespannt,
- Fig. 2: eine perspektivische Ansicht eines mit einem Druckmittel versehbaren Muffenteiles,
- Fig. 3: eine perspektivische Ansicht eines armförmig ausgestreckten Muffenteiles,
- Fig. 4: eine Seitenansicht eines Korbaufbaus,
- Fig. 5: eine Ansicht V aus Fig. 4, mit zusätzlichen Ausbrüchen versehen, in einer vergrößerten Darstellung,
- Fig. 6: einen Schnitt gemäß der Linie VI-VI in Fig. 7,
- Fig. 7: eine Draufsicht eines Korbaufbaus mit verdeckt dargestellten Unterbauteilen.

Die dargestellte, aufgerichtete Funktionssäule, eine Tragsäule 1 weist ein Rohr 2 runden Querschnitts auf. Es kann vom Boden einer Baulichkeit bis zur Decke derselben reichen und ist im Allgemeinen dort in schuh- oder flanschartigen Halterungen befestigt.

Vertikal beabstandet nimmt die Tragsäule 1 Elemente 3 auf. Es kann sich im Einzelnen um Aufnahmen 4, Halterungen 5 oder Ablagen 6 handeln.

Die Elemente 3 sind mittels Halterungsmuffen 7 am Rohr 2 der Tragsäule 1 befestigt. Letztere bilden zugleich ein Lagerauge, so dass sich die Elemente 3 außer einer Vertikalverlagerung auch um die geometrische Achse des bspw. aus Metall, bevorzugt Stahl, bestehenden Rohres 2 gehend verschwenken lassen.

Die untereinander gleich gestalteten Halterungsmuffen 7 sind mehrteilig, wie dargestellt zweiteilig, ausgebildet.

Die Teilungsebene der im Wesentlichen kreisrund gestalteten, hülsenartigen Halterungsmuffe 7 verläuft im Wesentlichen in einer Diametralen D-D, und zwar ebenenmäßig axialorientiert. Gemeint ist die vertikal ausgerichtete Längsmittelachse x-x, also die oben schon erwähnte geometrische Achse der Tragsäule 1 bzw. des Rohres 2.

Der formschlüssige Muffenumgriff ist dabei so, dass jedes Muffenteil 8 bzw. 9 entsprechend einem korrespondierenden Teilumfang der Tragsäule 1 zugeordnet ist. Der formschlüssig umfasste Befestigungsgrund der Mantelwand des Rohres 2 wirkt Verkippungstendenzen etwa aufgrund der Auslegergestalt sowie Eigenlast der Elemente 3 einschließlich Stell- oder Hanglast von Utensilien wirksam richtungshaltend im Sinne des oben angedeuteten Lagerauges.

Bezüglich der Muffenteile 8, 9 ist durch die gewählte diametrale Schnittstelle eine hälftige Zweiteilung angewandt. Sie bestehen demgemäß jeweils aus einem den halben Umfang der zylindrischen Mantelwand der Tragsäule 1 entsprechenden Schalenstück.

Die Muffenteile 8, 9 werden radial angesetzt und im Zuge einer axialorientierten Steckverbindung zu einem Haltering zusammengefügt. Hierzu dienen an den freien Enden der halbschalenartig gestalteten Muffenteile 8, 9 berücksichtigte Formschluss-Ausformungen.

Die Formschluss-Ausformungen erstrecken sich entsprechend in Vertikalrichtung der aufgerichteten Tragsäule 1.

Konkret handelt es sich bezüglich der Formschluss-Ausformungen um Fügepartner in Form von Nuten 10 und Rippen 11. Jedes Ende von Muffenteil 8 und Muffenteil 9 ist sowohl mit einer Nut 10 als auch einer Rippe 11 ausgestattet. Die sperraktiven Flanken erstrecken sich im Wesentlichen im Bereich der Diametralen D-D der Halterungsmuffe 7. Es können auch hinterschneidungsartige Strukturen angewandt sein, so dass eine hieraus erwachsende Verkrallung nutzbar ist.

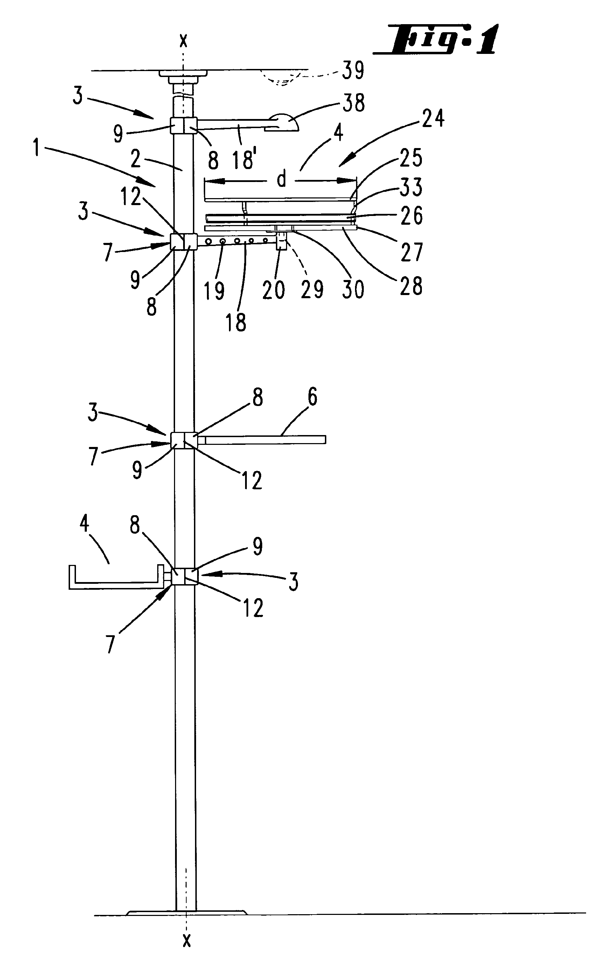

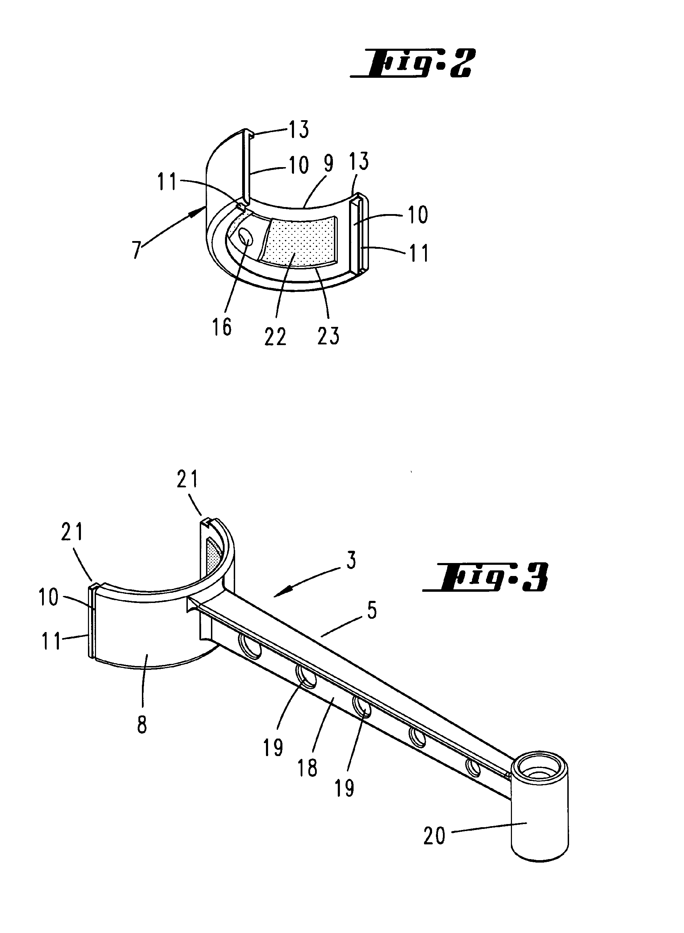

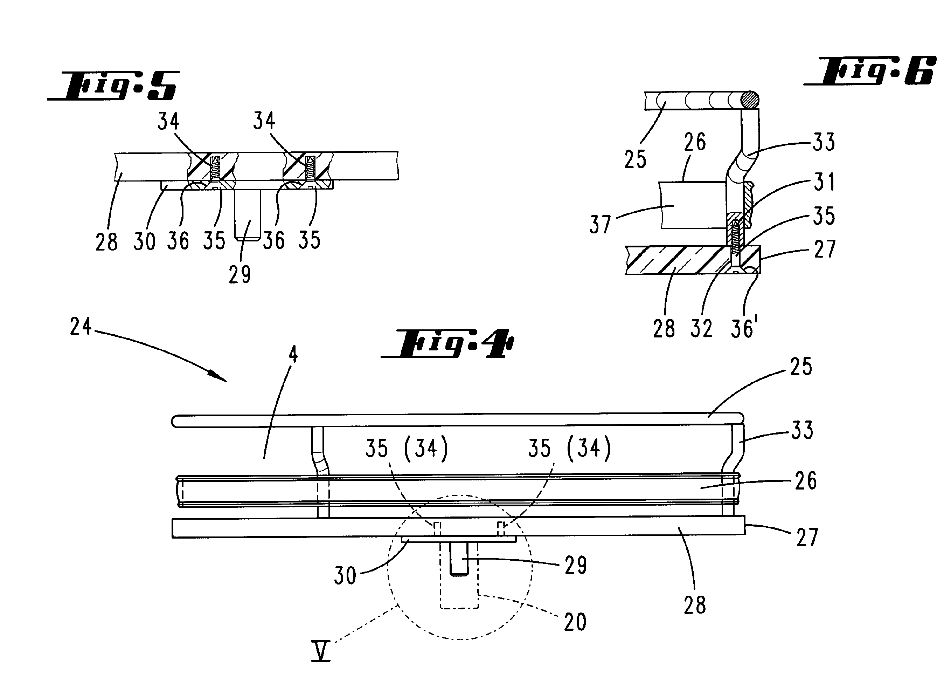

Wie ersichtlich, führen die einander partiell überlappenden Flanken der Nuten 10 und Rippen 11 insgesamt zu einer S-Fuge. Eine solche ist aus Fig. 3 ersichtlich und mit 12 bezeichnet.

Die axiale Steckverbindung der Muffenteile 8, 9 ist überlaufgesperrt. Hierzu ist so vorgegangen, dass die Nut 10 und/oder die Rippe 11 an einem dem Ende eines Einschubweges zugeordneten Bereich einen Anschlag 13 aufweist. Insoweit ist die Nut 10 samt ihrem der Rippe 11 vorgelagerten Innenbereich geschlossen.

Sind die seitlich, also senkrecht zur Längsmittelachse x-x zugehenden Muffenteile 9, 10 in der geschilderten Weise an 1 zu einem die Halterungsmuffe 7 bildenden Haltering geschlossen, erfolgt die Lagesicherung des jeweiligen Elements 3. Die entsprechende Festlegung an der Tragsäule 1 geschieht mittels eines zentral auf die Tragsäule 1 einwirkenden Druckmittels 14. Bestandteil eines solchen Druckmittels 14 ist eine Schraube 15. Die greift mit ihrem relativ kurz gehaltenen Schaft in ein Innengewinde 16 des der Aufnahme 4, Halterung 5 oder Ablage 6 entfernt gelegenen Muffenteils 9 der Halterungsmuffe 7.

Erkennbar ist das die Klemmkraft aufbringende Druckmittel 14, somit die Schraube 15, auf der Winkelhalbierenden des Muffenteils 9 angeordnet, und zwar auf mittlerer axialer Höhe desselben. Das Muffenteil 9 umschreibt wandungsgemäß einen Winkel von gut 180°.

Dem Innengewinde 16 bzw. seiner Bohrung ist, auswärts gelegen, eine Senkkopfvertiefung 17 koaxial vorgelagert. In dieser kommt der Schraubenkopf unter. Er bietet insoweit auch optisch visuell praktisch keinen Anreiz zu Manipulationen.

Der Kopf der Schraube 15 weist den üblichen Betätigungsschlitz auf, gegebenenfalls in einem Maß einer Dicke einer Münze.

Um genügend "Fleisch" für die Ausbildung des Gewindes 16 am Muffenteil 9 zu erhalten, und zwar trotz relativ hoher Dünnwandigkeit, ist der entsprechende Funktionsbereich von größerer Dicke als der Rest. Insgesamt kann hinsichtlich des Muffenteils 9 gleichsam von einem mondsichelartigen Gebilde gesprochen werden.

Während im Rücken des mit 9 bezeichneten Muffenteils die geschilderte Verund Feststellvorrichtung ausgebildet ist, geht vom Rücken des mit 8 bezeichneten Muffenteils die Halterung 5 aus. Sie wurzelt darin. Es handelt sich konkret um einen radial auswärts ragenden Arm 18. Der Arm 18 ist T-förmigen Querschnitts. Der nach unten gehende T-Steg ist mit einer Reihe Durchbrechungen 19 versehen. Der Arm 18 fungiert so als Kleiderhalter. Die Haken der Kleiderbügel lassen sich in die rundlochartigen Durchbrechungen 19 einhängen.

Das freie Ende des Armes 18 schließt mit einer vertikal orientierten Buchse 20 ab. Die kann oberseitig durch einen Stopfen, bspw. in Form einer Kugel mit Stielchen geschlossen werden, dies als Abrutschsicherung, wenn die Haken der Kleiderbügel die T-Schenkel übergreifend zugeordnet werden sollten. Ansonsten kann die Buchse 20 aber auch als Nabe für eine drehbare Ablage 6 in Form eines Einsäulen-Tischchens, genauer einer Tischplatte, dienen.

Auch der Arm 18 befindet sich in der Winkelhalbierenden des schalenförmigen, im Winkel wandungsmäßig 180° einschließenden Muffenteils 8.

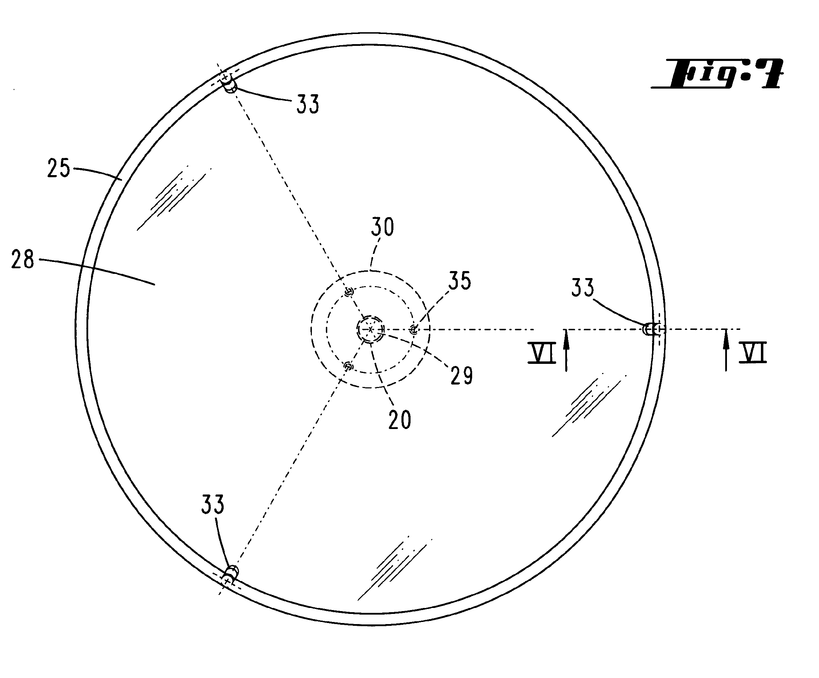

Wie beispielsweise Fig. 5 noch entnehmbar, springt das obere Ende der Formschluss-Ausformung des Muffenteils 8 um das Maß der axialen Dicke des Anschlages 13 zurück, dazu stellend eine Aussparung 21. In die taucht der Anschlag 13 axial ein. Oberer und unterer Stirnrand des Halteringes dass heißt Halterungsmuffe 7 sind so bezüglich beider Teile bündig.

Die Ver- und Feststellvorrichtung Druckmittel/Schraube 14/15 arbeitet in Bezug auf den Befestigungsgrund der Halterungsmuffe 7 beeinträchtigungsfrei. Dazu ist einem Muffenteil 9 innenseitig ein Reibschlussbelag 22 zugeordnet. Der ist als Lappen realisiert und ist in einem entsprechend gewölbten Bett 23 an der Innenwand des Muffenteils 9 randgefasst aufgenommen. Die Dicke des lappenartigen Reibschlussbelages 22 ist etwas größer als die Bett-Tiefe, so dass ein komprimierbarer Überstand nach radial innen vorliegt. Der trifft vorrangig auf den korrespondierenden Abschnitt der Mantelwand des Rohres 2. Erkennbar ist nahezu die gesamte Höhe und Breite der Innenseite flächenmäßig für den Reibschlussbelag 22 genutzt.

Das Lagerauge lässt sich durch mehr oder weniger festes Anziehen der Schraube 15 so auch drehgebremst haltern, dass heißt, das zeigerartige Verdrehen des Elements 3, zum Beispiel des Armes 18, kann nur willensbetont vorgenommen werden.

Zur Haltesicherung des aus Gummi bestehenden oder gummiartigen Reibschlussbelages 22 kann eine Verklebung angewandt sein. Der durch die Schraube 15 direkt belastbare Abschnitt ist freigängig, das heißt nicht klebeverhaftet.

Durch den zwischengelegten Reibschlussbelag 22 wirkt das Druckmittel 14 klemmaktiv, gleichwohl schonend via Reibschlussbelag 22 auf die Tragsäule 1. Das Stirnende der Schraube 15 kann leicht rotationssymmetrisch gewölbt sein, wenngleich auch ein ebenes, randgefasstes Schaftende in Bezug auf das Material des Reibschlussbelages 22 nicht abrasiv wirkt.

Der zeichnerischen Darstellung ist sodann entnehmbar, dass auch das mit 8 bezeichnete Muffenteil einen Reibschlussbelag 22 besitzt. Die Bezugsziffern sind sinngemäß angewandt.

Aufgrund des versteifend wirkenden T-Profils des Armes 18 ist eine besondere Materialanhäufung im Bereich des Zenits des Muffenteils 8 verzichtbar. Dort kann die allgemeine Wandungsdicke sogar noch leicht unterschritten werden, so dass hier dann nicht von einer mondsichelartigen Gestalt der Halbschale zu reden ist.

Eine korbartige Aufnahme 4 wird mittels eines Korbaufbaues 24 so ausgebildet, dass dieser brüstungsartig auf einem aus durchscheinendem farbigen Kunststoffmaterial bestehenden Korbboden 28 aufgebaut ist. Alle leuchtkräftigen Farben können zum Einsatz kommen. Bevorzugt kann blau, bspw. ultramarinblau, ausgewählt sein. Selbst eine Mischanordnung ist denkbar.

Am äußeren Umfang des Korbbodens 28 eingebrachte und vorzugsweise über einen Teilkreis gleich beabstandete Bohrungen 32 durchdringen den farbigen Korbboden 28 von seiner Unterseite ausgehend in der gesamten Dicke. Die Stärke liegt bei dem Maß einer Fingerdicke einer ausgewachsenen menschlichen Hand. Beim gewählten Durchmesser des Korbbodens 28 beträgt die Dicke etwa ein Fünfzehntel des Radius'. Letzterer liegt bei 15 cm. Die Dicke kann sogar zur Abstufung der Lichtwirkung variiert werden.

Der Korbboden 28 ist plattenförmig gestaltet. Sein umlaufender Stirnrand bleibt unverkleidet. Das erhöht den dortigen Lichtbrecheffekt und somit das erstrebte attraktive Äußere der korbartigen Aufnahme 4.

Von der Unterseite des Korbbodens 28 beginnend, befindet sich eine Ansenkung 36', die in eine Bohrung 32 mündet. Eine in diese Bohrung 32 eingebrachte Schraube 35 liegt in der Ansenkung 36' so eingebettet ein, dass der Kopf der Schraube 35, der ein Senkkopf ist, mit der Korbbodenunterseite bündig abschließt.

Der gewindetragende Abschnitt der Schraube 35 ragt nach oben hin aus dem Korbboden 28 heraus und greift in eine ebenfalls gewindetragende Bohrung 31 ein.

Diese Bohrung 31 befindet sich in einer nahezu S-förmig gewinkelten Stütze 33. Die Stütze 33 trägt an dem der Bohrung 31 gegenüberliegenden, freien Ende einen Drahtring 25. Der Drahtring 25 und die Stütze 33 sind miteinander beispielsweise thermisch verbunden, bspw. durch Schweißung.

An dem unteren, das Gewinde aufweisenden Abschnittes der Stütze 33, umgreift ein reifenförmiges Band 26 über seinen Innendurchmesser die Stützen 33. Es ist, beabstandend zum Korbboden 28, beispielsweise thermisch befestigt angebracht. Der Durchmesser dieses Bandes 26 ist annähernd so groß wie der Durchmesser (d) des farbigen Korbbodens 28 und trägt auf seiner Innenseite eine Spiegelfläche 37. Diese Spiegelfläche kann beispielsweise durch das Aufbringen eines korrosionsschützenden Belages respektive einer Beschichtung, wie bspw. durch Verchromen, erzeugt werden.

Der Korbboden 28 enthält in seinem Zentrumsbereich weiterhin einen kleiner gehaltenen Teilkreis, auf dem zu gleichen Teilen verteilt, gewindetragende Sacklöcher 34, von der Unterseite des Korbbodens 28 ausgehend, eingebracht sind. Die Bohrung 34 dient zur Aufnahme einer Schraube 35, die, bezüglich ihres Kopfes, in einer Senkung 36 eingebettet, einen Flansch 30 so trägt, dass der Korbaufbau 24 darüber am Arm 18 befestigbar ist und mittels eines Zapfens 29, zentrisch gelegen, und über eine, ein Lagerauge bildende Buchse 20 der Halterung 4 gelagert werden kann. Diese Steckverbindung stellt zugleich ein Drehlager dar.

Ein über dem zuletzt beschriebenen Element 3 befestigter, horizontaler Arm 18' kann eine elektrische Lichtquelle 38 so auslagernd halten, dass diese mittig über dem Element 3 im Bereich (d) des Korbaufbaus 24 fluchtet.

Die Lichtstrahlen, die durch die Lichtquelle 38 erzeugt werden, durchdringen den darunterliegenden, beabstandeten farbigen Korbboden 28 so, dass sie zum einen den farbigen Korbboden 28 durchfluten, wobei sie zum anderen so reflektiert von der Spiegelfläche 37 des Bandes 26 aufgenommen werden, dass sie als Streulicht widergespiegelnd in die Räumlichkeit abgegeben werden.

Der gleiche Lichteffekt kann über eine an einer Decke oder annährend daran befestigte Lichtquelle 39 erzielt werden. Die Lichtquelle 39 kann auch als Bodenstrahler realisiert sein. Das ermöglicht dann wand- bzw. deckenseitige Lichtflecken zu einer bevorzugt uni gehaltenen Räumlichkeit.

Alle offenbarten Merkmale sind (für sich) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

## Patentansprüche

1. Funktionssäule zur Aufstellung in beispielsweise einer Küche, mit einer vom Boden zur Decke reichenden Tragsäule (1), welche durch Verspannung gehalten ist, und an der Tragsäule (1) befestigten Elementen (3), wie Aufnahmen (4), Halterungen (5) oder Ablagen (6), wobei die Elemente (3) an einem die Tragsäule (1) bildenden Rohr (2) mittels Halterungsmuffen (7) einstellbar befestigt sind, wobei weiter eine Aufnahme (4) korbartig ausgebildet ist, mit einem aus durchscheinendem Material bestehenden Korbboden (28), **dadurch gekennzeichnet, dass** der aus einem Kunststoffmaterial bestehende Korbboden (28) farbig ist.

2. Funktionssäule nach Anspruch 1 oder insbesondere danach, **dadurch gekennzeichnet, dass** der zentral gehalterte Korbboden (28) fingerdick ausgebildet ist.

3. Funktionssäule nach einem oder mehreren der vorhergehenden Ansprüche oder insbesondere danach, **dadurch gekennzeichnet, dass** der Korbboden (28) plattenartig ausgebildet ist.

4. Funktionssäule nach einem oder mehreren der vorhergehenden Ansprüche oder insbesondere danach, **dadurch gekennzeichnet, dass** die umlaufende Stirnrandfläche (27) des Korbbodens (28) unverkleidet ist.

5. Funktionssäule nach einem oder mehreren der vorhergehenden Ansprüche oder insbesondere danach, **dadurch gekennzeichnet, dass** ein Korbaufbau (24) ein Band (26) aufweist, das jedenfalls innenseitig als Spiegelfläche (37) wirkt.

6. Funktionssäule nach einem oder mehreren der vorhergehenden Ansprüche oder insbesondere danach, **dadurch gekennzeichnet, dass** die Tragsäule (1) eine daran gehalterte elektrische Lichtquelle (38) aufweist.

7. Funktionssäule nach einem oder mehreren der vorhergehenden Ansprüche oder insbesondere danach, **dadurch gekennzeichnet, dass** die Lichtquelle (38) mittels eines auslegerartigen Armes (18') gehaltert ist.

8. Funktionssäule nach einem oder mehreren der vorhergehenden Ansprüche oder insbesondere danach, **dadurch gekennzeichnet, dass** der Abstand der Lichtquelle (38) zur Achse der Tragsäule (1) im Bereich des Durchmessers (d) des Korbbodens (28) liegt.
